Europäisches Patentamt

European Patent Office

Office européen des brevets

(11) Publication number: 0 376 128
A1

# EUROPEAN PATENT APPLICATION

(21) Application number: 89123475.9

(22) Date of filing: 19.12.89

(51) Int. Cl.5 B28D 1/12, B23D 61/18

(30) Priority: 28.12.88 IT 2312088

(43) Date of publication of application:
04.07.90 Bulletin 90/27

(84) Designated Contracting States:
BE DE ES FR SE

(71) Applicant: Fantoni, Alberto Filippini
Via Domenichino, 40
I-20149 Milan(IT)

(72) Inventor: Fantoni, Alberto Filippini
Via Domenichino, 40
I-20149 Milan(IT)

(74) Representative: Dr. Ing. A. Racheli & C.
Viale San Michele del Carso, 4
I-20144 Milano(IT)

(54) A cable with guided diamond inserts for cutting stone and marble materials, and fixed guide device therefor.

(57) A cutting wire assembly (15) consisting of a spirally wound cable (16) provided with integral cutting elements (18) which are fitted with a guide part (22) provided with opposing surfaces, to withstand lateral thrusts, and sliding surfaces, to withstand thrusts due to cutting pressure.

A device (10) working with the above mentioned cable has a guide (14) with a shape complementary to the shape of the guide part (22) of the cutting elements, in order to engage the same.

EP 0 376 128 A1

FIG. 4

# A CABLE WITH GUIDED DIAMOND INSERTS FOR CUTTING STONE AND MARBLE MATERIALS, AND FIXED GUIDE DEVICE THEREFOR

The application refers to the field of the stone and marble cutting by means of sliding spirally wound cables, which can be partially coated with diamonds or other abrasive materials, or can incorporate diamonds or other abrasive materials by sintering.

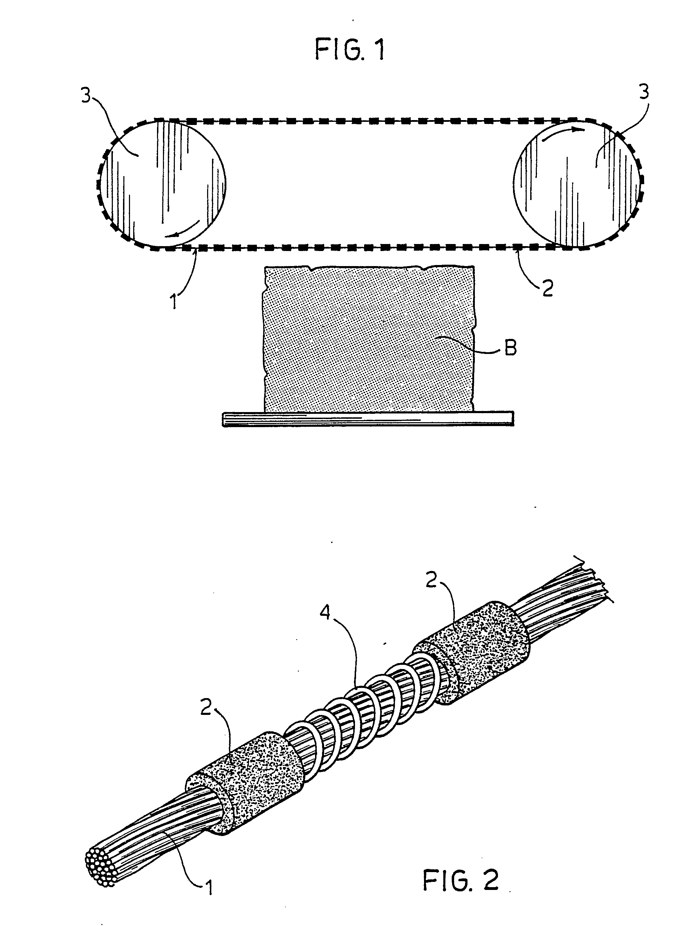

It is known that stone materials as marbles and granites are nowadays cut using different techniques. A well-known process is cutting by a spirally wound cable which by means of special devices is moved in a rapid translation with regard to the block to be cut (Figure 1). At present this cable is generally provided (through electrodeposition) with rings called "pearls", covered with diamond powder or incorporating diamonds in a sintered mass. These rings can freely rotate around the cable and are kept at predetermined intervals by spacers, like helicoidal springs or pipes made of elastic synthetic material or of vulcanized material (Figure 2).

Such generally accepted technique presents considerable disadvantages. Some disadvantages concern manufacturing and durability of the tool; for example the electrodeposited rings have a short working life, the manufacturing of thin-walled rings is difficult, the quantity of abrasive material incorporated in the rings is poor and accordingly they have a short life only. Furthermore replacement of rings around the cable is too expensive or even impossible.

Also cutting operations cause remarkable disadvantages, i.e. it is rather difficult to achieve straight cuts in hard or semihard not homogeneous materials. As is known, a stretched cable can be moved from an equilibrium position by applying a force in proportional relation to the cable tension and length. Therefore a cable with diameter from 4 to 6 mm stretched at a distance of 3000-4000 mm under a stress corresponding to some hundred or thousand kilograms can be displaced from its equilibrium position by applying a force corresponding to a few hectograms or a few kilograms.

If during the cutting the cable encounters parts of the material to be cut with different hardness it tends to avoid the obstacle or to deviate, causing a not uniform cut.

A further drawback is due to difficulties which arise in obtaining a pressure suitable to achieve a good cutting yield.

From the system geometry it can be inferred that the cable pressure is proportional to the cable tension, thus it has a low value as it is in relation to the little cable diameter and long contact arch. Consequently the material quantity removed in the time unit is rather poor and the lowering speed in the material is in the range of few centimeters per hour.

An aim of the invention is obviating to the above mentioned difficulties thanks to a system which allows more constructive facility, better cutting straightness, higher hour yield.

Such aim is achieved by a cutting wire assembly, which includes a helicoidal cable to which some cutting elements are secured, said elements comprising a guide body and an abrasive sector or segment, which is generally coated with diamonds. The guide body includes a guide portion and a seat for the cable passage. The guide portion is fitted with contrast or opposing surfaces for resisting lateral thrusts and/or sliding surfaces for the thrusts due to the penetration in the workpiece. The guide portion engages a guide preset on a strongly stretched blade, or into a generally fixed guide block, which ensures the cutting straightness and in the meanwhile allows sufficient pressure to be applied on the abrasive sectors to achieve a satisfactory cut yield. The elements to be secured to the cable can have different shapes. The seat for the cable passage may have a closed shape or a "U" shape, and can be locked by pressure, or welding by means of low melting point alloys (Pb, Sn, Cd).

Another object of the invention is a sawing apparatus or a sawing device, including a fixed guide, which is able to cooperate with the cable previously described.

The invention permits to achieve straight cuts in hard and semihard materials, also in case they are not homogeneous; furthermore it permits to obtain sufficient specific pressures, thus allowing a higher cutting yield as compared with usual devices; in addition the invention is easy to be carried out; it permits the use of diamond sectors of higher thickness allowing longer working life; it also permits replacement of broken or worn-out diamond sectors.

Some exemplary embodiments are described herebelow with reference to the enclosed drawings, in which:

Figure 1 and Figure 2 show the prior art; Figure 1 represents a lateral view in a reduced scale of a cutting cable fitted with diamond rings, stretched between two pulleys; Figure 2 is an enlarged broken-away view of a cable segment provided with diamond rings;

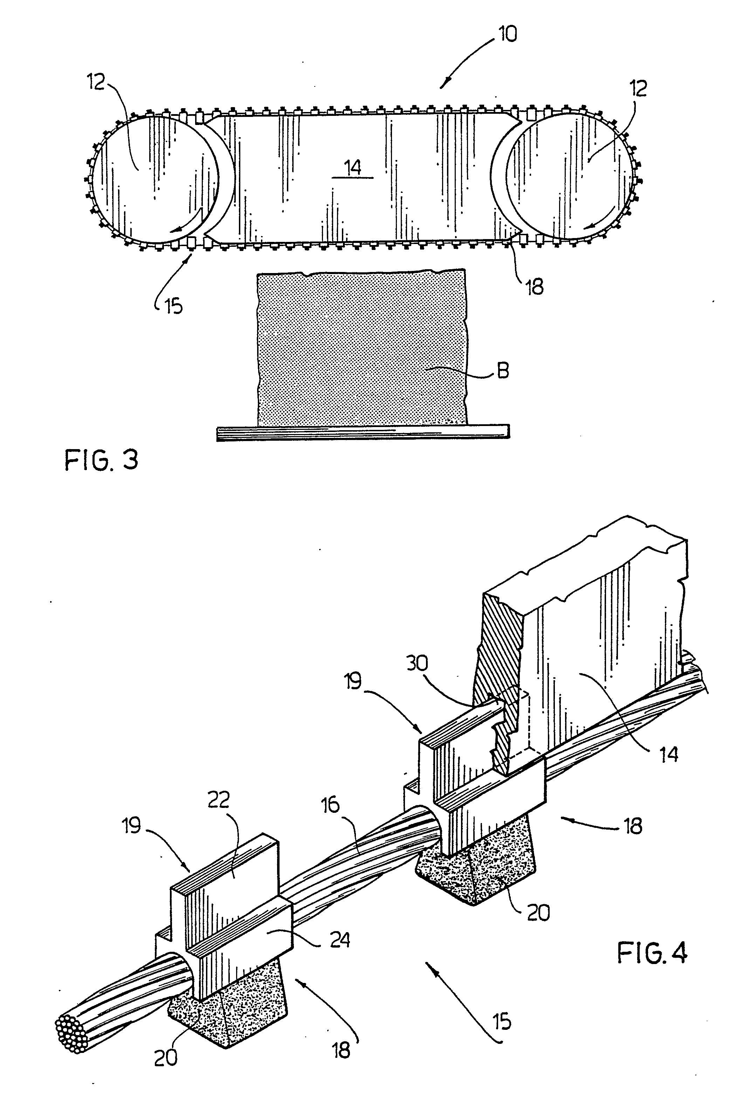

Figure 3 is a side view of the cutting device according to the invention, in small scale;

Figure 4 is a view of a cable assembly of the invention, the cable being shown in cooperation with a guide, the cable and the guide being broken-away;

Figure 5 is a front view of a cutting element body for the cable of the invention, in one embodiment;

Figure 6 is a front view of a second type of cutting element body;

Figure 7 is a front view of a third type of cutting element body;

Figure 8 is a front view of a fourth type of cutting element body;

Figure 9 is a front view of a cutting element complete of body and abrasive sector, secured to a cable (shown as sectional view) and engaged into the guide element;

Figure 10 is a view seen from the right side of Figure 9.

In Figures 1 and 2 is visible a prior art helicoidal cable 1 fitted with diamond sectors 2, said cable cutting stone block B. The diamond sectors 2 - also called abrasive segments or "pearls" - consist of rings which are free to rotate on cable 1, and spaced by means of springs 4. The cable is stretched between wheels 3 spaced from each other and is unsupported in the free space between the wheels.

The invention is now described with reference to Figures from 3 to 10.

The number 10 refers to a cutting device which includes a guide element 14 between two wheels or pulleys 12, one of which is a drive pulley; the guide element 14 does not move with the cable, but moves vertically, to ensure the lowering of the device. An endless cutting cable assembly 15 includes a cable 16, generally a spirally wound cable, whereon cutting elements 18 are secured at intervals along the length thereof; each element including a body 19 and an abrasive sector 20, which may be a diamond sector. Each element body 19 consists of a guide portion 22 and a portion 24 for fixing to the cable.

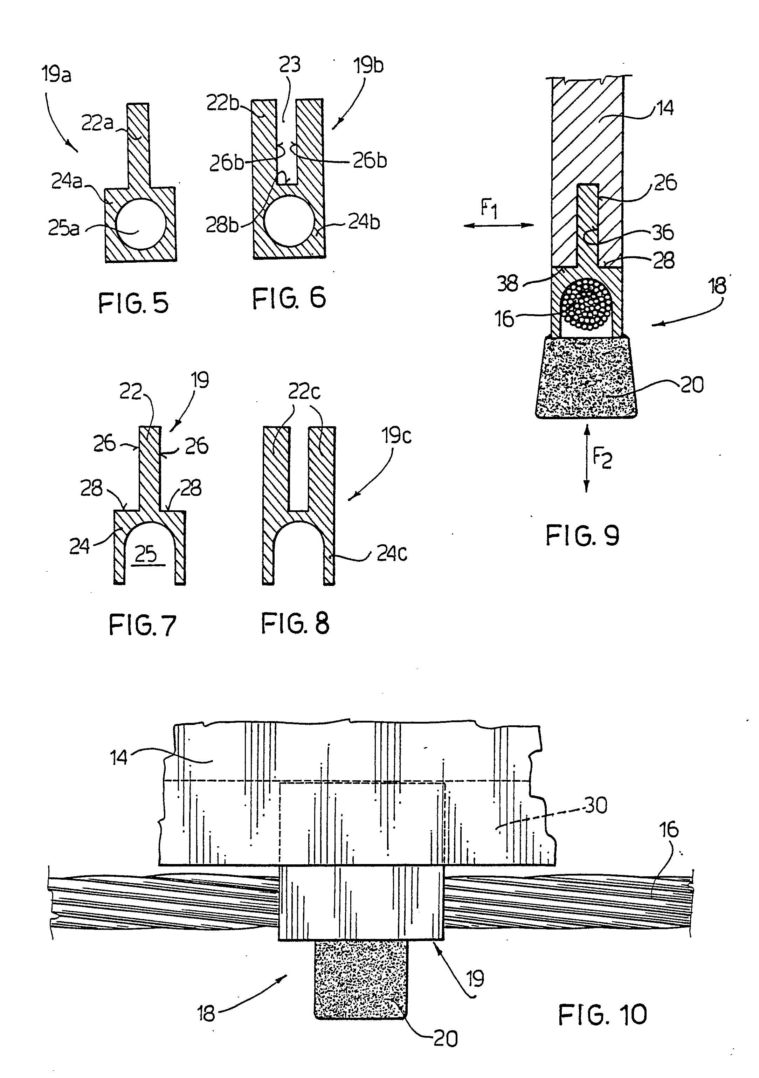

A cutting element 18 will be herebelow described with reference to Figures 7, 9, 10, showing a preferred embodiment.

The guide portion 22 of the body 19 has a male or wing-like shape and includes side guide surfaces 26 opposing the lateral thrusts, or cable deviation thrusts, as well as sliding surfaces 28, or vertical guide surfaces, opposing the cutting stresses. Portion 24 for clamping the element to the cable has an "U"-shaped cable seat 25 which is open on one side.

Each body 19 is secured to the cable 16 by means of pressure, or low melting point alloy welding (Pb, Sn, Cd), and it has diamond sector 20 fixed thereon, the sector being of a type with regular prismatic configuration, available on the market.

Other possible shapes of the cutting element 18 are given in the Figures 5, 6, 8; in Figure 5 the cutting element body 19a is provided with a wing type guide portion 22a, a ring type clamping portion 24a and a circular seat 25a. In Figure 6 the cutting element body 19b includes a female or "U"-shaped guide portion 22b, having a guide cavity 23, facing side guide surfaces 26b, bottom guide surface 28b, and clamping portion 24b - for clamping to the cable - similar to the one of body 19a. Body 19c, Figure 8, comprises a guide portion 22c, similar to the one of body 19b, and a clamping portion 24c similar to the one of body 19.

Guide 14 is fitted with an engagement part of a shape complementary to the shape of body guide portion of elements 18 (18a, 18b, 18c); for example the guide (not represented) for the elements having body 19c or 19d has an engagement part having a wing-like male section for getting into the cavity or female element 23, located between the wings 22b and 22c. Guide 14 for engaging elements 18 having bodies 22 and 22a is provided with longitudinal guide cavity 30.

A preferred cutting element and guide shape is given in Figures 9 and 10. Body 19 is secured to the cable 16, and the diamond sector 20 is fixed thereon by means of brazing. Guide 14 is provided with cavity or hollow 30 for slidably engaging the element male portion 22; one can see that the element body surfaces 26, abutting against opposed guide surfaces 36, withstand possible lateral thrusts on the cable (in the direction shown by arrow F1); element body surfaces 28, abutting against facing guide surfaces 38, withstand possible bending of the cable in the direction indicated by arrow F2, due to forces orthogonal to the previous ones, and substantially due to cutting stresses.

This shape 18 of the element allows the cable to run on a pulley having a race with diameter equal to the diameter of the cable itself, and with grooves on the bottom for the passage of the element guide portion. With such an arrangement no seats for the guide male elements are required.

## Claims

1. A sliding cable cutting device, including a cable (16) provided with abrasive cutting elements (18), said cable being stretched between two pulleys and driven by at least one of such pulleys, characterized in that the cutting elements (18) are fitted with a guide portion (22; 22a; 22b; 22c); further characterized in that the device includes at least one guide element (14) in the cutting area between the pulleys, for engaging said guide portions (22) of the cutting elements.

2. A device according to claim 1, characterized in that the guide portions (22; 22a ...) and the guide (14) include cooperating opposed surfaces (26; 26b) for withstanding forces generating lateral deviations, that is transversal to the cable and to the guide.

3. A device according to claim 1, characterized in that said guide portions (22; 22a ...) and the guide (14) include cooperating opposed surfaces (28; 28b) for withstanding forces due to cutting, and substantially transversal to the cable and directed towards the guide.

4. A device according to claim 1, characterized in that the cutting element guide portion has a wing or male shape (22), while the guide element includes a longitudinal hollow or cavity (30), which receives such a wing or male element.

5. A device according to claim 1, characterized in that the guide portion includes a hollow seat (23) between wings while the guide element includes a projecting part, for engaging such a seat.

6. A device according to claim 1, characterized in that each said cutting element includes a cable engaging seat (25) and is secured with such a seat to the cable itself.

7. A device according to claim 6, characterized in that the cable seat is a through hole (25a).

8. A device according to claim 6, characterized in that the cable seat is a "U"-shaped cavity, open on one side.

9. A cutting cable including abrasive elements secured to it and spaced from each other, characterized in that each element (18) is provided with a diamond sector (20) and a body (19) with a guide portion (22; 22a ...) positioned on the side opposite to the diamond sector (20).

10. A cable according to claim 9, characterized in that the guide portion is a projecting wing or male portion.

11. A cable according to claim 9, characterized in that said guide portion is an "U"-shaped projection part, or female part, having a guide seat between the branches of the "U".

12. A cable according to claim 9, characterized in that the cutting elements are secured to the cable by welding.

13. A cutting element body for a sliding cutting cable provided with abrasive sectors characterized in that it is fitted with an extended guide portion and with a seat for receiving the cable.

14. A body according to claim 13, characterized in that the guide portion has the shape of a wing.

15. A body according to claim 13, characterized in that the guide portion has the shape of a hollow included between two wings.

16. A body according to claim 13, characterized in that the cable seat has the shape of a through hole.

17. A body according to claim 13, characterized in that the cable seat is "U"-shaped, open on one side.

## FIG. 1

## FIG. 2

FIG. 3

FIG. 4

FIG. 5

FIG. 6

FIG. 7

FIG. 8

FIG. 9

FIG. 10

| | European Patent Office | EUROPEAN SEARCH REPORT | Application Number |
|---|---|---|---|

EP 89 12 3475

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-2 154 428 (T. TULLIUS) <br> * Page 6, lines 18-27; page 7, lines 13-17; claims 7,8; figures 1-6 * <br> --- | 1-17 | B 28 D 1/12 <br> B 23 D 61/18 |
| X | SU-A- 691 307 (CONS MAT EXTN TRANS) <br> * The whole document * <br> --- | 1-4,6,7 ,9,10, 13,14, 16 | |
| A | SU-A-1 070 012 (DIAMOND TOOLS DES RE) <br> * Figure 2, reference 7 * <br> --- | 17 | |
| P,X | EP-A-0 336 253 (MVZ MASCHINENBAU UND VERZAHNUNGSTECHNIK) <br> * Abstract; column 5, lines 11-18; figures 1-7 * <br> ----- | 1-4,6- 11,13, 16,17 | |
| | | | TECHNICAL FIELDS SEARCHED (Int. Cl.5) |
| | | | B 28 D <br> B 23 D |

The present search report has been drawn up for all claims

| Place of search | Date of completion of the search | Examiner |
|---|---|---|
| THE HAGUE | 30-03-1990 | MOET H.J.K. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

  .......................................................................
& : member of the same patent family, corresponding
   document

EPO FORM 1503 03.82 (P0401)